(19) Europäisches Patentamt
European Patent Office
Office européen des brevets

(11) **EP 4 550 605 A2**

(12) **EUROPEAN PATENT APPLICATION**

(43) Date of publication:
07.05.2025  Bulletin 2025/19

(21) Application number: 24210237.4

(22) Date of filing: 31.10.2024

(51) International Patent Classification (IPC):
*H02J 3/00* (2006.01)    *H02J 3/14* (2006.01)

(52) Cooperative Patent Classification (CPC):
**H02J 3/003; H02J 3/008; H02J 3/14;** H02J 2203/20;
H02J 2310/60; H02J 2310/64

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  31.10.2023  IN 202311074185

(71) Applicant: Honeywell International Inc.
**Charlotte, NC 28202 (US)**

(72) Inventors:
• **POONJA, Bharath**
**Charlotte, 28202 (US)**

• **KAMATH, Madhav**
**Charlotte, 28202 (US)**
• **LINGAN, Magesh**
**Charlotte, 28202 (US)**
• **RANJAN, Prabhat**
**Charlotte, 28202 (US)**
• **GARIKAPATI, Praveen Kumar**
**Charlotte, 28202 (US)**
• **R, Ragesh**
**Charlotte, 28202 (US)**
• **KHANDELWAL, Shubham**
**Charlotte, 28202 (US)**

(74) Representative: **Haseltine Lake Kempner LLP
Cheapside House
138 Cheapside
London EC2V 6BJ (GB)**

(54) **AUTOMATICALLY MODULATING POWER USAGE OF A FACILITY TO REDUCE UTILITY DEMAND CHARGES**

(57)    Live and historical power usage data of one or more loads of a facility may be provided to an AI/ML (Artificial Intelligence/Machine Learning) model. The AI/ML model predicts one or more predicted power usage peaks that are predicted to occur during a future time window based at least in part on the live and historical power usage data of the one or more loads of the facility.

One or more loads of the facility are identified that are predicted to contribute to each of the one or more predicted power usage peaks. One or more of the loads of the facility that are predicted to contribute to a selected one of the one or more predicted power usage peaks are controlled to curtail power usage during the selected one of the one or more predicted power usage peaks.

FIG. 1

EP 4 550 605 A2

# EP 4 550 605 A2

## Description

### RELATED APPLICATIONS

This application claims the benefit of Indian Provisional Application No. 202311074185, filed October 31, 2023, which application is incorporated by reference in its entirety.

### TECHNICAL FIELD

The present disclosure relates generally to method and systems for reducing utility charges of a facility.

### BACKGROUND

Facilities typically receive most or all of their electrical power from a utility. Commercial electricity customers are typically billed consumption charges as well as demand charges. Consumption charges are for the volume of electricity consumed and are often measured in kilowatt-hours (kWh). Consumption charges are often referred to as energy charges, and typically applicable to residential customers as well. Demand charges, which are typically not applied to residential bills, are billed for the highest level of electricity demand ("peak demand") of a customer during a billing period, often measured in kilowatts (kW). The "peak demand" is typically defined as the highest average electricity usage occurring within a defined time interval (e.g. 15 minutes) during the billing period. For many commercial customers, demand charges can account for 30-70 percent of the total utility charges on a monthly electric bill. Because peak demand is based on how and when a customer uses electricity, two customers that consume similar amounts of overall electricity in a month can incur very different demand charge expenses depending on their peak demand during the billing period. What would be desirable are system and method for automatically modulating power usage of a facility to control and reduce utility demand charges.

### SUMMARY

The present disclosure relates to method and systems for reducing energy charges of a facility. An example method includes providing live and historical power usage data of one or more loads of the facility to an AI/ML (Artificial Intelligence/Machine Learning) model. The AI/NΠ, model predicts one or more predicted power usage peaks that are predicted to occur during a future time window based at least in part on the live and historical power usage data of the one or more loads of the facility. One or more loads of the facility are identified that are predicted to contribute to each of the one or more predicted power usage peaks. One or more of the loads of the facility that are predicted to contribute to a selected one of the one or more predicted power usage peaks are controlled to curtail power usage during the selected one of the one or more predicted power usage peaks.

Another example may be found in a system for reducing energy charges of a facility that includes one or more energy loads. The example system includes an input for receiving live and historical power usage data of one or more loads of the facility, an output for controlling one or more of the loads of the facility, and a controller that is operatively coupled to the input and the output. The controller is configured to use an AI/NΠ, (Artificial Intelligence/Machine Learning) model to predict one or more predicted power usage peaks that are predicted to occur during a future time window based at least in part on the live and historical power usage data of the one or more loads of the facility. The controller is configured to identify one or more loads of the facility that are predicted to contribute to each of the one or more predicted power usage peaks. The controller is configured to control one or more of the loads of the facility that are predicted to contribute to a selected one of the one or more predicted power usage peaks to curtail power usage during the selected one of the one or more predicted power usage peaks.

Another example may be found in a non-transitory computer readable medium that stores instructions. When the instructions are executed by one or more processors, the one or more processors are caused to receive live and historical power usage data of one or more loads of a facility and to use an AI/ML (Artificial Intelligence/Machine Learning) model to predict one or more predicted power usage peaks that are predicted to occur during a future time window based at least in part on the live and historical power usage data of the one or more loads of the facility. The one or more processors are caused to identify one or more loads of the facility that are predicted to contribute to each of the one or more predicted power usage peaks. The one or more processors are caused to control one or more of the loads of the facility that are predicted to contribute to a selected one of the one or more predicted power usage peaks to curtail power usage during the selected one of the one or more predicted power usage peaks.

The preceding summary is provided to facilitate an understanding of some of the innovative features unique to the present disclosure and is not intended to be a full description. A full appreciation of the disclosure can be gained by taking the entire specification, claims, figures, and abstract as a whole.

BRIEF DESCRIPTION OF THE FIGURES

The disclosure may be more completely understood in consideration of the following description of various examples in connection with the accompanying drawings, in which:

Figure 1 is a schematic block diagram showing an illustrative system for reducing energy charges of a facility;
Figures 2A and 2B are flow diagrams that together show an illustrative method for reducing energy charges of a facility;
Figure 3 is a schematic view of an illustrative workflow;
Figure 4 is a schematic view of an illustrative power prediction algorithm;
Figure 5 is a schematic view of an illustrative DLM (Dynamic Load Management) algorithm;
Figure 6 is a graphical representation of DLM and TOU (Time Of Use) over time;
Figure 7 is a schematic block diagram showing an illustrative self-learning algorithm for curtailing power usage of a building;
Figure 8 is a graphical representation of identifying equipment that is contributing to a power consumption peak;
Figure 9 is a flow diagram showing an illustrative method for identifying equipment that contributes to a peak demand; and
Figure 10 is a flow diagram showing an illustrative method for self-learning.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

Machine learning and/or other algorithms may be used to predict future power consumption of a facility, both on a facility-wide basis and in some cases on an equipment-by-equipment basis. Being able to predict when electrical consumption of a facility will peak allows a facility to lower peak consumption by shifting when and how various equipment of the facility are operated. As an example, machines that consume large amounts of electrical power may be operated during times of lower overall electrical demand, and thus the electrical power consumed by those machines will be off peak and thus less expensive. If a prediction is made that running HVAC equipment at a particular time of day (sometimes in combination with other equipment in the facility) will cause the building's electrical consumption to reach a level that triggers one or more of the additional fees charged by a utility (e.g. demand charges), operation of the HVAC equipment may be curtailed to reduce electricity demand at that time of day. Rather, the HVAC equipment may be operated before the particular time of day to reach a different temperature setpoint (e.g. a pre-cooling setpoint) that, for cooling, is several degrees below the desired comfort setpoint in the space. Then, the HVAC equipment may be idled, or operated at a lower capacity, during the particular peak time of day. Because the building was pre-cooled in this example, the HVAC equipment may be able to maintain the desired temperature setpoint even when operating at a lower power consumption level during that peak time. This is just one example of load shifting.

In some instances, energy consumption may be predicted using any combination of various model like Linear regression, ARIMAX and CatBoost. Data points fed to the model(s) may include kW history data (e.g. from facility wide electrical meters, equipment specific electric meters, etc.), weather parameters (humidity, dewpoint, temperature) and equipment and working time schedules. These are just examples. Using the predicted energy consumption, facility power demand may be dynamically curtailed to reduce or eliminate utility demand charges such as TOU (Time Of Use) demand charges, peak demand charges, demand response charges and other demand charges.

In some instances, a combination of models may be used, such as a short term (on the order of four hours) effective model and a long term (on the order of 24 to 48 hours) effective model. As an example, ARIMAX and/or CatBoost may be used as a short-term effective model while linear regression may be used as a long term effective model. Using multiple models together may provide better accuracy of the predicted power consumption of the facility. In some instances, predictions may be updated on a regular basis, such as every 30 minutes or every 60 minutes, sometimes a moving or sliding window approach. Other timeframes are also contemplated.

In some instances, sudden changes (e.g. falls, rises) in kW history data are first smoothed before providing a smoothed kW history data to the models. This may help improve the accuracy of the predicted power consumption of the facility. In some instances, occupancy predictions of the facility may be fed as an input to the models, which may also help improve the accuracy of the predicted power consumption of the facility. As an example, more people in a space may mean more people operating electrical equipment and/or may place additional demands on HVAC equipment. Equipment operation and/or operating parameters may be correlated with power consumption of the equipment. Operation schedules for equipment may be provided as an input to the models to help improve the accuracy of the predicted power consumption of the facility. Being able to identify particular equipment that contributes to consumption peaks is useful to identify appropriate action to take to reduce peak consumption during a billing period to reduce or eliminate some or all of the utility demand charges. In some cases, an Artificial Intelligence (AI) and/or Machine Learning (ML) algorithm may be trained to predict the power consumption of the facility into the future, and when the predicted power consumption is expected to invoke one or more utility demand charges, dynamically curtail one or more identified loads of the facility in order to avoid or at least reduce the utility demand charges before they occur.

In some cases, the Artificial Intelligence (AI) and/or Machine Learning (ML) algorithm may be a self-learning algorithm that continuously learns the behavior of the equipment and the particular operation of the facility under various operating conditions. In some instances, self-learning may contribute to being able to automatically identify appropriate equipment to achieve kW reductions, and when to ramp up and/or ramp down the equipment operations (sometimes taking into account equipment delays) in order to lower electrical consumption peaks and reduce exposure to demand charges and other possible tariffs charged by the electrical utility. In some instances, recovery actions (e.g. actions restoring the curtailed equipment back to the pre-curtailed state) may take building space convenience such as comfort into account. For example, during the curtailment, if a building schedule indicates that a setback period will arrive shortly, the Artificial Intelligence (AI) and/or Machine Learning (MI,) algorithm may determine that recovery following the curtailment can be skipped to eliminate the recovery actions to further reduce utility demand. In some cases, the Artificial Intelligence (AI) and/or Machine Learning (ML) algorithm may determine that a partial recovery is warranted (e.g. not recover all the way to the pre-curtailed state), and may implement a partial recovery. These are just examples.

In some cases, the Artificial Intelligence (AI) and/or Machine Learning (ML) algorithm may take building and/or equipment rules into account when controlling the equipment. For example, the building and/or equipment rules may include, for example, lights must remain on during ordinary business hours, security cameras and other security and fire equipment must remain on 24x7, power to a server room in the building must remain on 24x7, start sequence/stop sequence of a chiller must be maintained, and/or a furnace fan must remain on for at least 2 minute after the furnace burner is deactivated. These are just examples. Some of these building and/or equipment rules may be safety critical.

In some case, and because of these building and/or equipment rules, there is a delay between when a command is sent to a piece of equipment and when a corresponding reduction in electrical energy demand is realized. For example, a chiller may only allow a setpoint of the chiller to be changed once every 15 minutes. Thus, any reduction in electrical energy demand by changing the setpoint of the chiller may be delayed by up to 15 minutes. The Artificial Intelligence (AI) and/or Machine Learning (ML) algorithm may learn these delays and may take them into account when deciding which equipment to curtail and when to curtail the equipment to reduce or eliminate utility demand charges during predicted peak demand periods. The Artificial Intelligence (AI) and/or Machine Learning (ML) algorithm (e.g. load management algorithm) may monitor multiple parameters such as load, time of use, demand response events, supply sources, etc., in order to identify and prioritize curtailment actions when conflicts arise between competing goals. The Artificial Intelligence (AI) and/or Machine Learning (ML) algorithm may also calculate cost savings for demand charge reduction and reductions in energy consumption. In some instances, Demand Load Management (DLM) may include energy supply side switching. For example, if energy demand is not reduced after taking various curtailment actions, then DLM may switch the energy supply from the utility to one or more local energy sources (e.g. diesel generator, battery, solar, wind), or may supplement the energy supplied by the utility with energy from one or more local energy sources to reduce the demand from the utility during predicted peak time periods. The actions taken by the Artificial Intelligence (AI) and/or Machine Learning (ML) algorithm may be communicated to a building operator via, for example, an operator console.

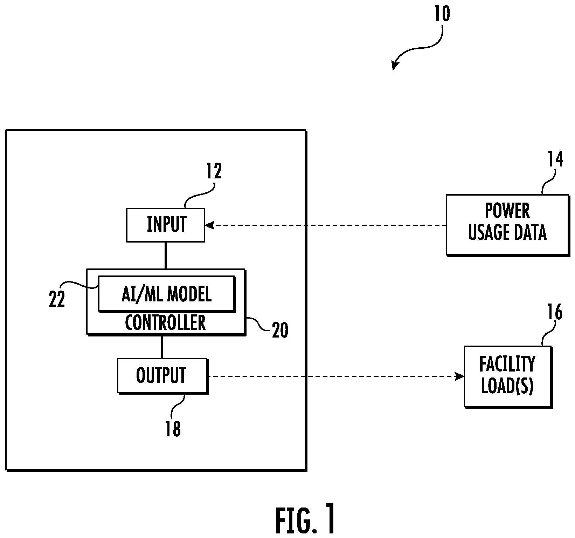

Figure 1 is a schematic block diagram showing an illustrative system 10 for reducing energy charges of a facility. The illustrative system 10 includes an input 12 for receiving live and historical power usage data 14 of one or more facility loads 16, and an output 18 for controlling one or more of the facility loads 16. The one or more facility loads 16 may include any of a variety of different equipment within the facility. A controller 20 is operatively coupled to the input 12 and the output 18. The controller 20 may include or be operably coupled with an AI/NΠ, (Artificial Intelligence/Machine Learning) model 22. The controller 20 is configured to use the AI/NΠ, model 22 to predict one or more predicted power usage peaks that are predicted to occur during a future time window based at least in part on the live and historical power usage data 14 of the one or more facility loads 16. The controller 20 is configured to identify one or more facility loads 16 that are predicted to contribute to each of the one or more predicted power usage peaks. The controller 20 is configured to control one or more of the facility loads 16 that are predicted to contribute to a selected one of the one or more predicted power usage peaks to curtail power usage during the selected one of the one or more predicted power usage peaks. In some cases, the controller 20 may be configured to control one or more of the facility loads 16 that are predicted to contribute to the selected one of the one or more predicted power usage peaks by initiating a control action to a respective one of the one or more loads before the selected one of the one or more predicted power usage peaks to account for a delay between when the control action is initiated and when the respective one of the one or more loads actually curtails its power usage.

In some cases, the controller 20 may be configured to compare the live energy usage data that is captured during the future time window with the one or more predicted power usage peaks to determine whether the AI/ML model 22 failed to predict one or more power usage peaks during the future time window that exceeded a threshold power usage, resulting in one or more missed power usage peaks. The controller 20 may be configured to identify one or more facility loads 16 that contributed to each of the one or more missed power usage peaks based at least in part on operational parameters of the one or more loads during the one or more missed power usage peaks. In some cases, the controller 20 may be configured to provide as inputs an identifier of the identified one or more facility loads 16 that contributed to each of the missed power usage peaks and one or more operational parameters of the identified one or more loads that contributed to the missed power usage peaks to the AI/NΠ, model 22 as feedback to enhance future predictions of the AI/MI, model 22. In some cases, the one or more operational parameters of each of the identified one or more loads that contributed to the missed power usage peaks may include one or more parameters that impact the energy usage of the corresponding load. In some cases, the one or more operational parameters are provided to the AI/NΠ, model and the AI/NΠ, model may determine the one or more parameters that impact the energy usage of the corresponding load.

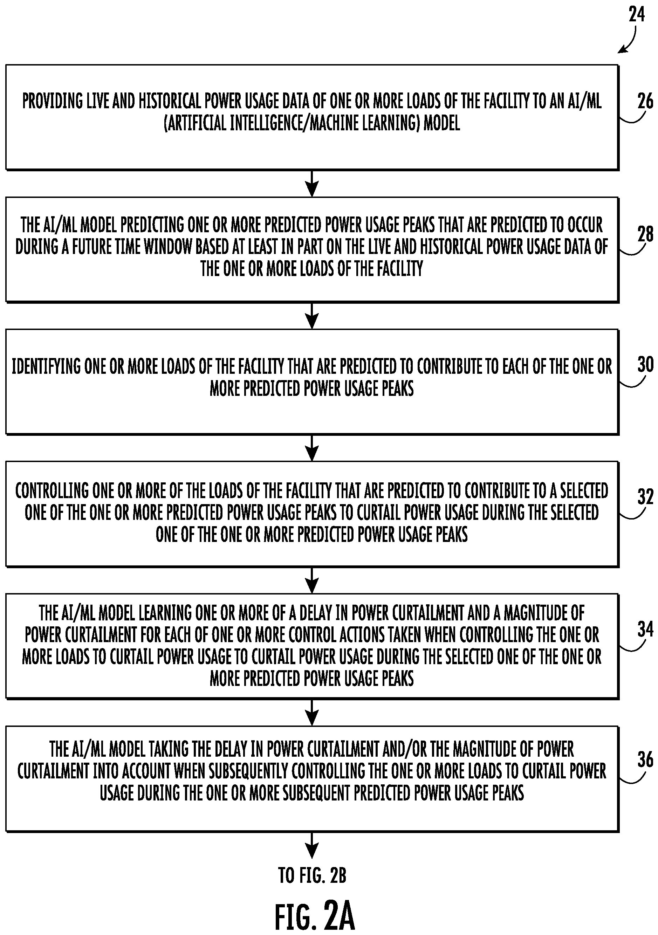

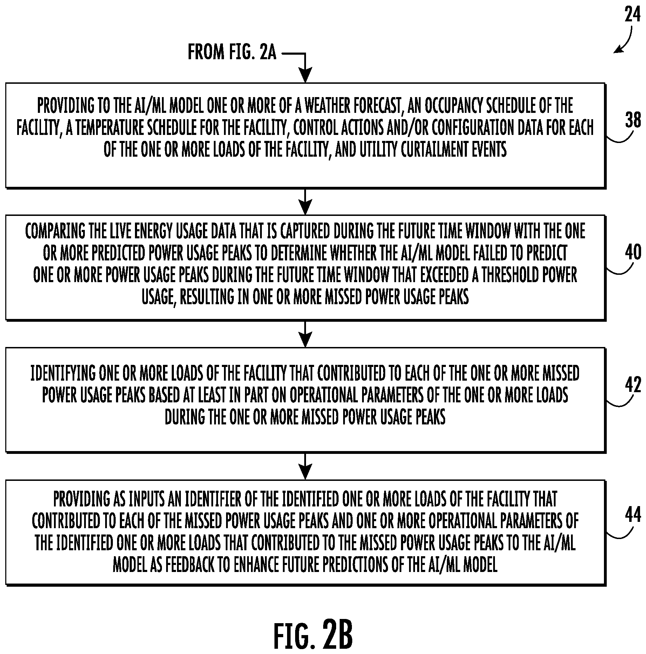

Figures 2A and 2B are flow diagrams that together show a method 24 for reducing energy charges of a facility. The method 24 includes providing live and historical power usage data of one or more loads of the facility to an AI/NΠ, (Artificial Intelligence/Machine Learning) model (such as the AI/ML model 22), as indicated at block 26. The AI/NΠ, model predicts one or more predicted power usage peaks that are predicted to occur during a future time window based at least in part on the live and historical power usage data (such as the power usage data 14) of the one or more loads of the facility (such as the facility load(s) 16), as indicated at block 28. The method 24 includes identifying one or more loads of the facility that are predicted to contribute to each of the one or more predicted power usage peaks, as indicated at block 30. One or more of the loads of the facility that are predicted to contribute to a selected one of the one or more predicted power usage peaks are controlled to curtail power usage during the selected one of the one or more predicted power usage peaks, as indicated at block 32. In some cases, controlling one or more of the loads of the facility that are predicted to contribute to the selected one of the one or more predicted power usage peaks may include initiating a control action to a respective one of the one or more loads before the selected one of the one or more predicted power usage peaks to account for a delay between when the control action is initiated and when the respective one of the one or more loads actually curtails its power usage.

In some cases, the AI/NΠ, model may predict a power usage of the one or more loads of the facility during the future time window, and may predict each of the one or more predicted power usage peaks when the cumulative power usage of the one or more loads of the facility exceeds a threshold power usage. The threshold power usage may be received from a utility, for example. In some instances, the AI/ML model may include a first prediction model that predicts the power usage over a first time horizon of the future time window and a second prediction model that predicts power usage over a second time horizon of the future time window, wherein the second time horizon is longer than the first time horizon. In some cases, the AI/ML model may repeatedly predict at an update interval one or more predicted power usage peaks that are predicted to occur during rolling future time windows based at least in part on the live and historical power usage data of the one or more loads of the facility. As an example, the first time horizon may be 12 hours or less, the second time horizon may be 3 days or less, and the update interval may be 4 hours or less.

In some cases, the method 24 may include the AI/NΠ, model learning one or more of a delay in power curtailment and/or a magnitude of power curtailment for each of one or more control actions taken when controlling the one or more loads to curtail power usage during the selected one of the one or more predicted power usage peaks, as indicated at block 34. The AI/NΠ, model may take the delay in power curtailment and/or the magnitude of power curtailment into account when subsequently controlling the one or more loads to curtail power usage during the one or more subsequent predicted power usage peaks, as indicated at block 36.

Continuing on Figure 2B, the method 24 may include providing to the AI/ML model one or more of a weather forecast, an occupancy schedule of the facility, a temperature schedule for the facility, control actions and/or configuration data for each of the one or more loads of the facility, and utility curtailment events, as indicated at block 38. These are just examples. The AI/NII, model may predict one or more predicted power usage peaks that are predicted to occur during a future time window based at least in part on the live and historical power usage data (such as the power usage data 14) of the one or more loads of the facility (such as the facility load(s) 16), as well as one or more of the weather forecast, the occupancy schedule of the facility, the temperature schedule for the facility, control actions and/or configuration data for each of the one or more loads of the facility, and utility curtailment events.

In some cases, the method 24 may include comparing the live energy usage data that is captured during the future time window with the one or more predicted power usage peaks to determine whether the AI/NII, model failed to predict one or more power usage peaks during the future time window that exceeded a threshold power usage, resulting in one or more missed power usage peaks, as indicated at block 40. The method 24 may include identifying one or more loads of the facility that contributed to each of the one or more missed power usage peaks based at least in part on operational parameters of the one or more loads during the one or more missed power usage peaks, as indicated at block 42. In some cases, the one or more operational parameters that contributed to the missed power usage peaks may include one or more parameters that impact the energy usage of the corresponding load. For example, the operational parameters may include, for example, operational temperatures, operational pressures, operational states, operational modes, operational schedules, etc. The method 24 may include providing as inputs an identifier of the identified one or more loads of the facility that contributed to each of the missed power usage peaks and one or more operational parameters of the identified one or more loads that contributed to the missed power usage peaks to the AI/NII, model, and in some cases one or more operational parameters of the one or more loads, as feedback to enhance future predictions of the AI/NII, model, as indicated at block 44.

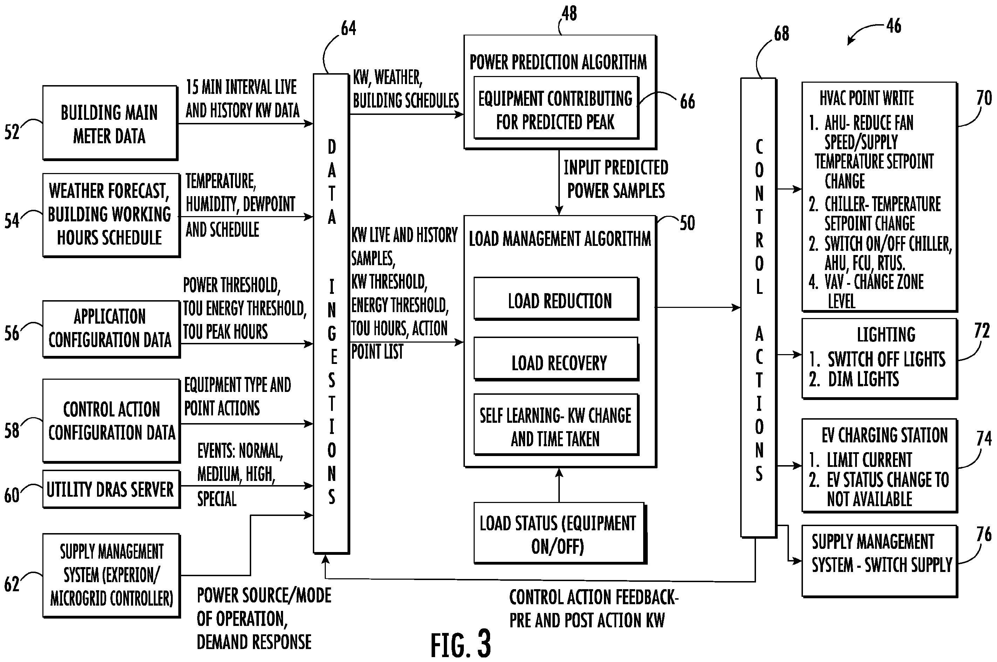

Figure 3 provides a schematic view of an illustrative workflow 46. The illustrative workflow 46 includes a Power Prediction Algorithm 48 and a Load Management Algorithm 50. On the left side of Figure 3, a number of example inputs to the Power Prediction Algorithm 48 and the Load Management Algorithm 50 are shown, including data from a building main meter data source 52, a weather source 54, an application configuration data source 56, a control action configuration data source 58, a utility DRAS (Demand Response Automation Server) 60 and a supply management system 62. The illustrative inputs include building main meter data such as 15 minute interval live kW data along with historical kW data. The illustrative inputs include weather forecast data such as temperature, humidity, dewpoint, solar load and the building working hours schedule. The illustrative inputs include application configuration data such as power threshold, time of use energy thresholds and time of use peak hours. In some instances, the power threshold may be determined based on utility bill data and previous energy consumption, and may be proposed to the operator. Some or all of the inputs may be defined by the utility. The illustrative inputs include control action configuration data such as equipment type and point actions. The illustrative inputs include data from the utility DRAS server 60, which serves as an interface between the utility and the building. The utility DRAS server 60 may receive real time events from the utility, such normal, medium, high and special events, and these events may be provided as input data to the Load Management Algorithm 50. The illustrative inputs include data from the power supply management system 62, such as power source (Line power from the utility, microgrid power, solar power, wind power, etc.), mode of operation and demand response data. The Power Prediction Algorithm 48 and/or the Load Management Algorithm 50 may be implemented as an Artificial Intelligence (AI) algorithm and/or Machine Learning (ML) algorithm.

In the example shown, the inputted data is provided to a Data Ingestion block 64, which consolidates and organizes the inputted data into inputs for the Power Prediction Algorithm 48 and the Load Management Algorithm 50. The inputs for the Power Prediction Algorithm include the building main meter data (kW), weather and building schedules. The Power Prediction Algorithm 48 identifies equipment 66 that is contributing to a predicted power peak and outputs power predictions to the Load Management Algorithm 50. The Load Management Algorithm 50 receives the outputted power predictions from the Power Prediction Algorithm 48. The Load Management Algorithm 50 also receives the building main meter data (kW), the kW threshold, the energy threshold, the time of use hours and action point list from the Data Ingestion block 64. The Load Management Algorithm 50 outputs a load status, and provides instructions to a Control Actions block 68. In the example shown, the instructions include a variety of HVAC instructions, lighting instructions, EV charging station instructions and supply management instructions. These are just examples.

The Control Actions block 68 provides pre- and post-action kW data as feedback to the Data Ingestion block 64, which are used by the Power Prediction Algorithm 48 and/or the Load Management Algorithm 50 as control action feedback to refine and improve the accuracy of the Power Prediction Algorithm 48 and/or the Load Management Algorithm 50 over time (e.g. via self-learning). The Control Actions block 68 may send control commands to any of an HVAC system 70, a lighting system 72, an EV charging system 74 and/or a Supply Management System 76 in the example shown.

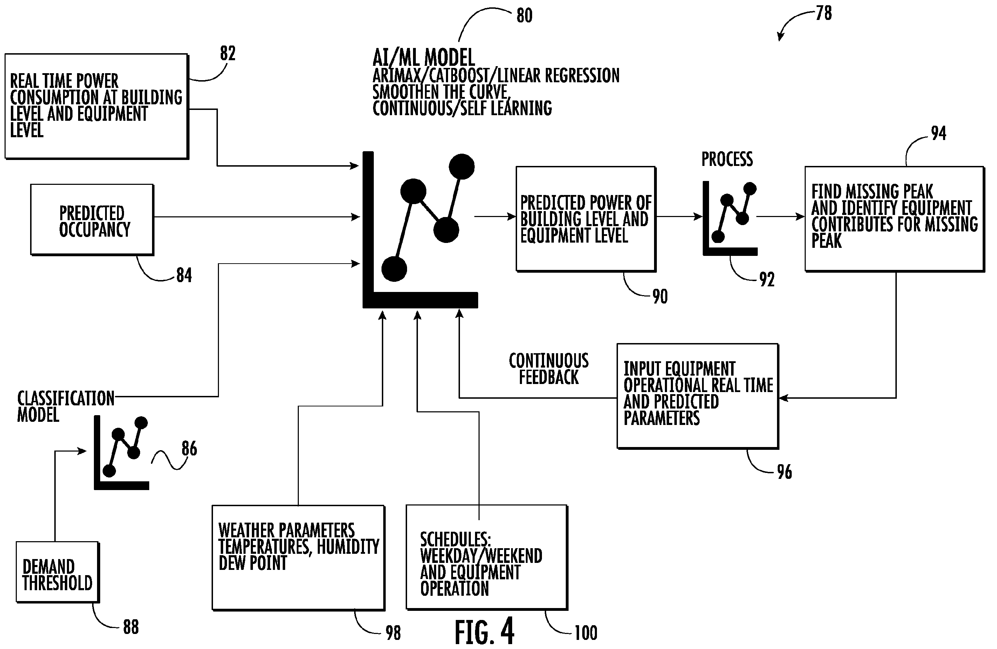

Figure 4 provides a schematic view 78 of power prediction of the Power Prediction Algorithm 48 of Figure 3. An AI/ML (Artificial Intelligence/Machine Learning) model 80 is in the upper center of Figure 4. The AI/NII, model 80 receives real time power consumption data at the building level and at equipment level, as indicated at block 82, as well as predicted occupancy of the building, as indicated at block 84. A classification model 86 receives demand threshold information, as indicated at block 88, and provides a demand event classification (e.g. demand or non-demand) to the AI/NII, model 80.

The AI/NΠ, model 80 outputs predicted power for the building level and the equipment level, as indicated at block 90, which is then provided to a Process model 92. The Process model 92 outputs missing power peaks and equipment responsible for the missing power peaks, as indicated at block 94, which in turn is provided to an Input Equipment block 96. The Input Equipment block 96 provides real time and predicted power parameters for continuous feedback to the AI/ML model 80 for learning purposes. Weather parameters, as indicated at block 98, and scheduling information, as indicated at block 100, are also provided to the AI/NΠ, model 80 to help improve the accuracy of the Power Prediction Algorithm 48.

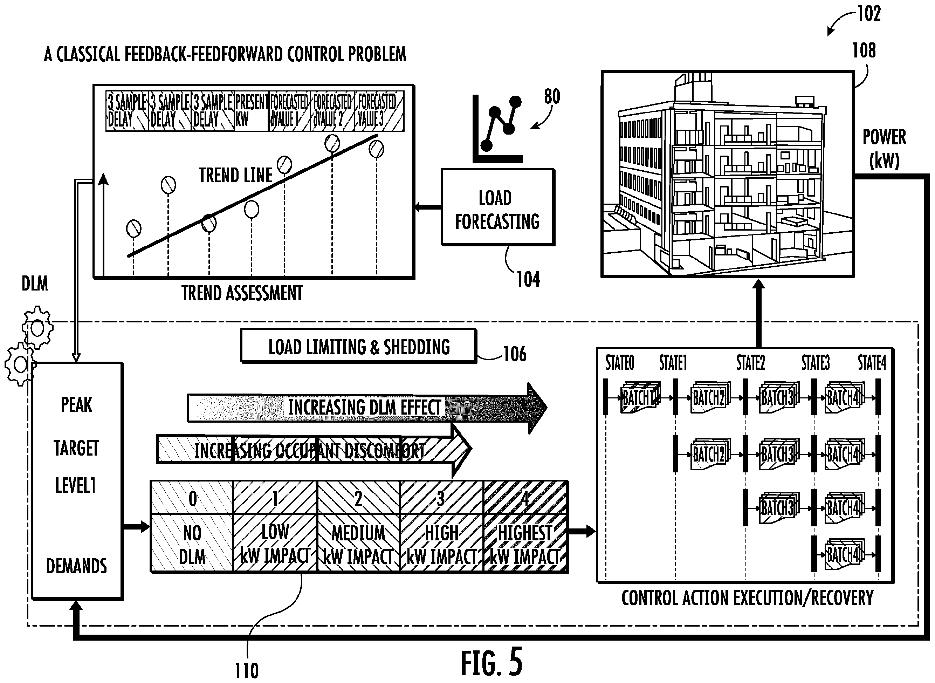

Figure 5 is a schematic drawing regarding a DLM (Dynamic Load Management) algorithm 102 of the Load Management Algorithm 50 of Figure 3, which takes the form of a feedback-feedforward control loop. The AI/ML model in the upper center of Figure 5 provides power load forecasting, as indicated at block 104, which is used for power trend assessment. In some cases, the load forecast may be provided by the Power Prediction Algorithm 48 discussed above. A Load Limiting and Shedding block 106 receives the power trend assessment as well as the actual or live power consumption of a building 108. Depending on the power trend assessment and the actual power consumption of the building 108, certain actions are implemented over time in stages by a state machine. The actions are each associated with an expected impact on power curtailment of the building. For example, the actions may include a no impact action, a low impact action, a medium impact action, a high impact action and a highest impact action, as generally indicated at block 110. As shown along the bottom of Figure 5, the Load Limiting and Shedding block 106 executes certain batches of these actions in stages to achieve a desired degree of power curtailment during a desired time range. In the example shown, a highest impact action is executed for some time, followed by two no impact actions, followed by three medium impact actions, followed by four recover actions.

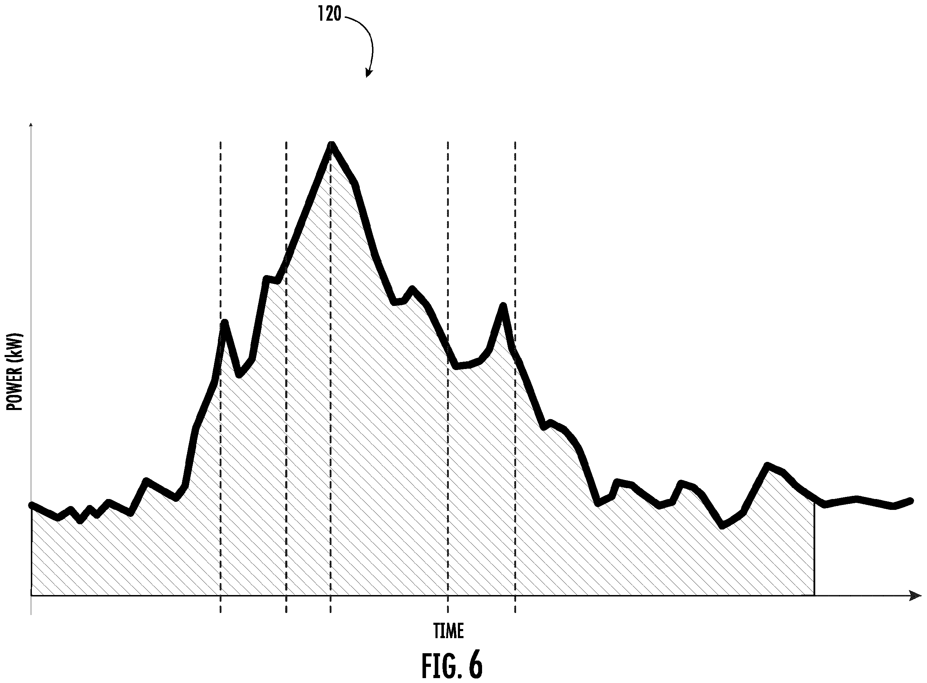

Figure 6 is a graphical representation 120 of DLM and TOU that plots power consumption versus time. In some instances, there is a desired to reduce demand charges (and other tariffs) while incentivizing consumers to smooth their demand profile. In some instances, the charges for electricity may be given by the following equation:

$$\text{Bill}(\$) = \text{D1}\,(kWh) * \text{Tariff[0]}\,(\$/kWh) + \text{D2}\,(kWh) * \text{Tariff[1]}(\$/kWh)$$

where D2 represents power consumption above a peak demand during a billing period. The power consumption receives a higher tariff, namely tariff[1]. The general idea is to lower the highest power consumption peak, in order to avoid higher tariffs, as well as generally reduce the total energy used represented by the area under the curve (and D1 in the above equation).

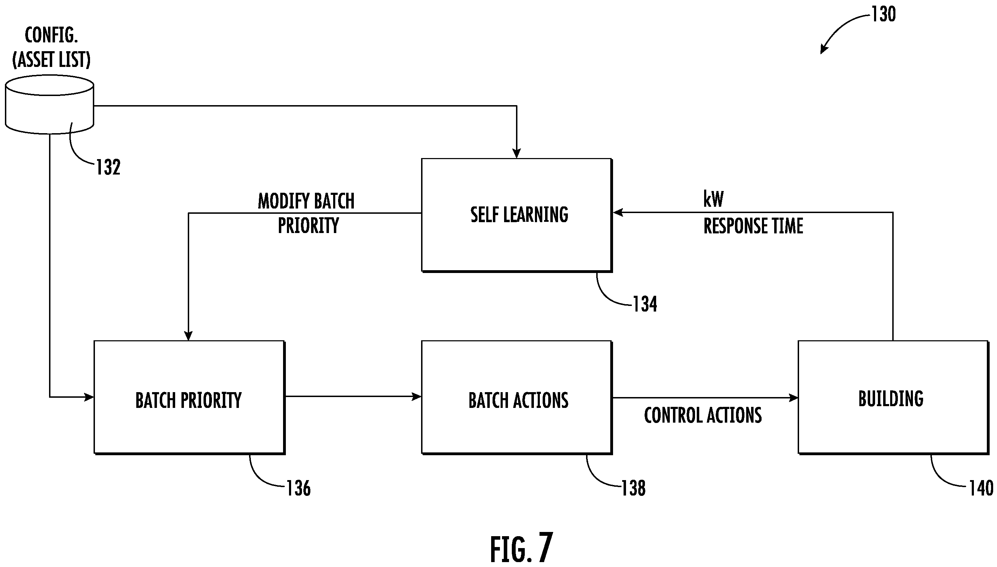

Figure 7 is a schematic block diagram showing an example self-learning algorithm 130 for curtailing power usage of a building. A database 132 includes an asset list, which is provided to a Self-Learning block 134. In some instances, the Self-Learning block 134 may include automatic addition (or suggestion to add) equipment that is contributing to the peak but is not included in the equipment in the list provided by the operator. Controlling this unlisted equipment may help reduce peak demand. In some instances, the power capacity of equipment and profiling based on run time may be used as inputs to self-learning modules. The Self-Learning block 134 outputs a modified batch priority to a Batch Priority block 136. The Batch Priority block 136 also receives information from the database 132. The Batch Priority block 136 outputs to a Batch Actions block 138, which generates and outputs control actions to the building 140 to curtailing power usage of the building 140 to avoid demand charges from the utility. The building 140 provides actual power consumption data and response time to the Self-Learning block 134. The Self-Learning block 134 receives feedback on the consequences or results of its decisions and resulting batch actions, which serves to improve subsequent control action decisions. In some instances, demand and energy baseline may be used in calculating savings from demand and energy reduction.

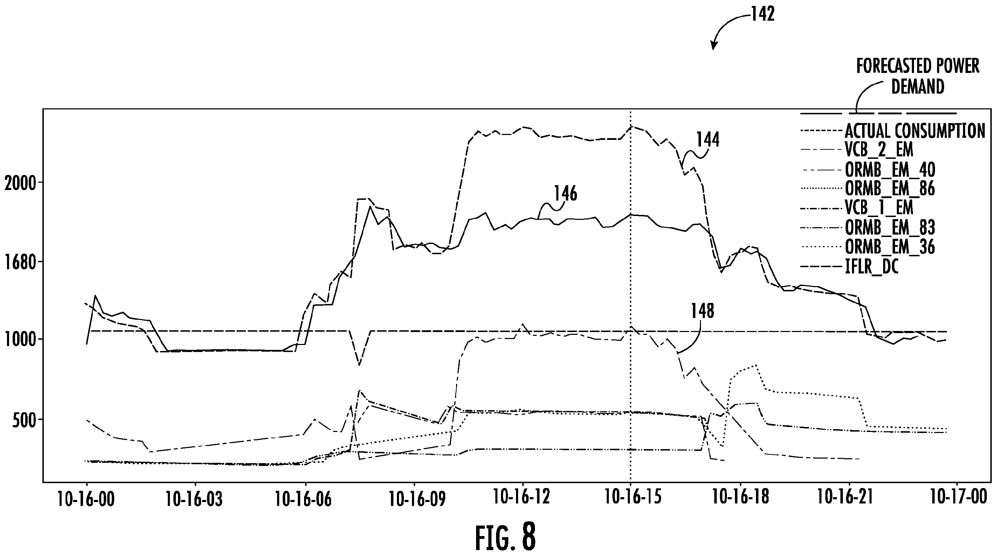

Figure 8 is a graphical representation 142 of identifying equipment that is contributing to a predicted power consumption peak. The graph 142 shows power consumption over various equipment in a facility over time. A graphed line 144 represents actual consumption while a graphed line 146 represents predicted consumption. A graphed line 148 represents power consumption by a particular piece of equipment. The correlation between the graphed line 144 and the graphed line 148 shows that the particular piece of equipment is significantly contributing to the peak. The corresponding piece of equipment may be analyzed so that the factors impacting the equipment (e.g. operational temperatures, operational pressures, operational states, operational modes, operational schedules) will be provided to the AI/ML model to improve future predictions. For example, if the particular equipment is a chiller, factors such as chilled water temperature, chilled water pump speed and others that majorly impact chiller operation will be provided and incorporated into the AI/ML model to help improve the accuracy of the AI/ML model in predicting the actual consumption of the facility. The AI/NΠ, model may also use the power consumption over various equipment in the facility over time to identify one or more actions to take to curtail energy consumption by a certain amount and at a certain time (e.g. during a demand event and/or to prevent a peak from exceeding a power threshold). By learning the predicted power contribution of each of the piece of equipment, and any delays in achieving a desired curtailment in power consumption of the piece of equipment after a corresponding curtailment action, the AI/ML, model may identify which equipment or combination of equipment to curtail and when to curtail each piece of equipment to reduce or eliminate utility demand charges.

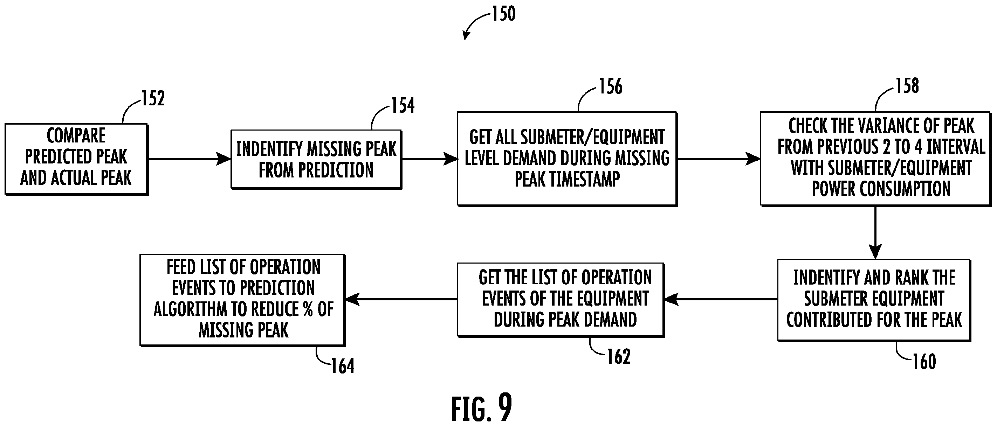

Figure 9 is a flow diagram showing an illustrative method 150 for identifying equipment that contributes to a peak demand. The method 150 begins with comparing predicted and actual peaks, as indicated at block 152. Any missing peaks are identified, as indicated at block 154. Submeter or equipment level demand during a time period corresponding to the missing peak(s) is obtained, as indicated at block 156. Historical peaks are compared, as indicated at block 158. The submeter or equipment responsible for the missing peak(s) is identified, as indicated at block 160. A list of operation events (e.g. operational parameters) during the peak demand period is obtained, as indicated at block 162. The list of operation events (e.g. operational parameters) is provided to the prediction algorithm to reduce the number of missing peaks, as indicated at block 164.

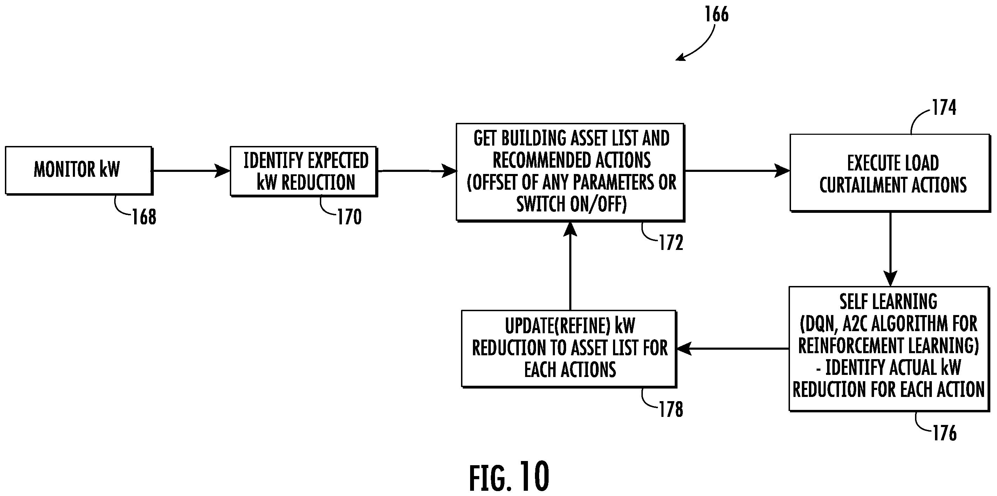

Figure 10 is a flow diagram showing an illustrative method 166 for self-learning. The method 166 begins with monitoring power consumption, as indicated at block 168. An expected reduction in power consumption is identified, as indicated at block 170. A building asset list and recommended actions are obtained, as indicated at block 172. Load curtailment actions are executed, as indicated at block 174. A self-learning algorithm identifies the actual curtailment in power consumption, as indicated at block 176. A kW reduction to equipment list, which shows how much power consumption may be reduced by curtailing operation of a particular piece of equipment is updated, as indicated at block 178. This information is provided to the block 172 in order to create a feedback loop.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

**Claims**

1. A method for reducing energy charges of a facility, the method comprising:

   providing live and historical power usage data of one or more loads of the facility to an AI/NΠ, (Artificial Intelligence/Machine Learning) model;
   the AI/MI, model predicting one or more predicted power usage peaks that are predicted to occur during a future time window based at least in part on the live and historical power usage data of the one or more loads of the facility;
   identifying one or more loads of the facility that are predicted to contribute to each of the one or more predicted power usage peaks; and
   controlling one or more of the loads of the facility that are predicted to contribute to a selected one of the one or more predicted power usage peaks to curtail power usage during the selected one of the one or more predicted power usage peaks.

2. The method of claim 1, wherein controlling one or more of the loads of the facility that are predicted to contribute to the selected one of the one or more predicted power usage peaks comprises: initiating a control action to a respective one of the one or more loads before the selected one of the one or more predicted power usage peaks to account for a delay between when the control action is initiated and when the respective one of the one or more loads actually curtails its power usage.

3. The method of claim 1, wherein the AI/ML model predicts a power usage of the one or more loads of the facility during the future time window, and predicts each of the one or more predicted power usage peaks when the cumulative power usage of the one or more loads of the facility exceeds a threshold power usage.

4. The method of claim 1, wherein the AI/MI, model comprises:

   a first prediction model that predicts the power usage over a first time horizon of the future time window; and
   a second prediction model that predicts power usage over a second time horizon of the future time window, wherein the second time horizon is longer than the first time horizon.

5. The method of claim 4, wherein the AI/ML model repeatedly predicts at an update interval one or more predicted power usage peaks that are predicted to occur during rolling future time windows based at least in part on the live and historical power usage data of the one or more loads of the facility.

6. The method of claim 5, wherein the first time horizon is 12 hours or less, the second time horizon is 3 days or less, and the update interval is 4 hours or less.

7. The method of claim 1, comprising

the AI/ML model learning one or more of a delay in power curtailment and a magnitude of power curtailment for each of one or more control actions taken when controlling the one or more loads to curtail power usage to curtail power usage during the selected one of the one or more predicted power usage peaks; and
the AI/ML model taking the delay in power curtailment and/or the magnitude of power curtailment into account when subsequently controlling the one or more loads to curtail power usage during the one or more subsequent predicted power usage peaks.

8. The method of claim 1, comprising providing to the AI/ML model one or more of:

a weather forecast;
an occupancy schedule of the facility;
a temperature schedule for the facility;
control actions and/or configuration data for each of the one or more loads of the facility; and
utility curtailment events.

9. The method of claim 1, comprising:

comparing the live energy usage data that is captured during the future time window with the one or more predicted power usage peaks to determine whether the AI/ML model failed to predict one or more power usage peaks during the future time window that exceeded a threshold power usage, resulting in one or more missed power usage peaks;
identifying one or more loads of the facility that contributed to each of the one or more missed power usage peaks based at least in part on operational parameters of the one or more loads during the one or more missed power usage peaks; and
providing as inputs an identifier of the identified one or more loads of the facility that contributed to each of the missed power usage peaks and one or more operational parameters of the identified one or more loads that contributed to the missed power usage peaks to the AI/NΠ, model as feedback to enhance future predictions of the AI/MI, model.

10. The method of claim 9, wherein the threshold power usage is received from a utility.

11. The method of claim 9, wherein the one or more operational parameters of each of the identified one or more loads that contributed to the missed power usage peaks include one or more parameters that impact the energy usage of the corresponding load.

12. The method of claim 11, wherein the one or more operational parameters are provided to the AI/ML model and the AI/MI, model determines the one or more parameters that impact the energy usage of the corresponding load.

13. A system for reducing energy charges of a facility, wherein the facility includes one or more energy loads, the system comprising:

an input for receiving live and historical power usage data of one or more loads of the facility;
an output for controlling one or more of the loads of the facility;
a controller operatively coupled to the input and the output, the controller configured to:

use an AI/NΠ, (Artificial Intelligence/Machine Learning) model to predict one or more predicted power usage peaks that are predicted to occur during a future time window based at least in part on the live and historical power usage data of the one or more loads of the facility;
identify one or more loads of the facility that are predicted to contribute to each of the one or more predicted power usage peaks; and
control one or more of the loads of the facility that are predicted to contribute to a selected one of the one or more predicted power usage peaks to curtail power usage during the selected one of the one or more predicted power usage peaks.

14. The system of claim 13, wherein the controller is configured to control one or more of the loads of the facility that are predicted to contribute to the selected one of the one or more predicted power usage peaks by initiating a control action to a respective one of the one or more loads before the selected one of the one or more predicted power usage peaks to account for a delay between when the control action is initiated and when the respective one of the one or more loads actually curtails its power usage.

15. The system of claim 13, wherein the controller is configured to:

compare the live energy usage data that is captured during the future time window with the one or more predicted power usage peaks to determine whether the AI/ML model failed to predict one or more power usage peaks during the future time window that exceeded a threshold power usage, resulting in one or more missed power usage peaks;

identify one or more loads of the facility that contributed to each of the one or more missed power usage peaks based at least in part on operational parameters of the one or more loads during the one or more missed power usage peaks; and

provide as inputs an identifier of the identified one or more loads of the facility that contributed to each of the missed power usage peaks and one or more operational parameters of the identified one or more loads that contributed to the missed power usage peaks to the AI/NΠ, model as feedback to enhance future predictions of the AI/ML model.

10

12

INPUT ◄------------------ POWER USAGE DATA  14

AI/ML MODEL  22

CONTROLLER  20

OUTPUT ------------------► FACILITY LOAD(S)  16

18

FIG. 1

24

PROVIDING LIVE AND HISTORICAL POWER USAGE DATA OF ONE OR MORE LOADS OF THE FACILITY TO AN AI/ML (ARTIFICIAL INTELLIGENCE/MACHINE LEARNING) MODEL — 26

THE AI/ML MODEL PREDICTING ONE OR MORE PREDICTED POWER USAGE PEAKS THAT ARE PREDICTED TO OCCUR DURING A FUTURE TIME WINDOW BASED AT LEAST IN PART ON THE LIVE AND HISTORICAL POWER USAGE DATA OF THE ONE OR MORE LOADS OF THE FACILITY — 28

IDENTIFYING ONE OR MORE LOADS OF THE FACILITY THAT ARE PREDICTED TO CONTRIBUTE TO EACH OF THE ONE OR MORE PREDICTED POWER USAGE PEAKS — 30

CONTROLLING ONE OR MORE OF THE LOADS OF THE FACILITY THAT ARE PREDICTED TO CONTRIBUTE TO A SELECTED ONE OF THE ONE OR MORE PREDICTED POWER USAGE PEAKS TO CURTAIL POWER USAGE DURING THE SELECTED ONE OF THE ONE OR MORE PREDICTED POWER USAGE PEAKS — 32

THE AI/ML MODEL LEARNING ONE OR MORE OF A DELAY IN POWER CURTAILMENT AND A MAGNITUDE OF POWER CURTAILMENT FOR EACH OF ONE OR MORE CONTROL ACTIONS TAKEN WHEN CONTROLLING THE ONE OR MORE LOADS TO CURTAIL POWER USAGE TO CURTAIL POWER USAGE DURING THE SELECTED ONE OF THE ONE OR MORE PREDICTED POWER USAGE PEAKS — 34

THE AI/ML MODEL TAKING THE DELAY IN POWER CURTAILMENT AND/OR THE MAGNITUDE OF POWER CURTAILMENT INTO ACCOUNT WHEN SUBSEQUENTLY CONTROLLING THE ONE OR MORE LOADS TO CURTAIL POWER USAGE DURING THE ONE OR MORE SUBSEQUENT PREDICTED POWER USAGE PEAKS — 36

TO FIG. 2B

FIG. 2A

12

24

FROM FIG. 2A

PROVIDING TO THE AI/ML MODEL ONE OR MORE OF A WEATHER FORECAST, AN OCCUPANCY SCHEDULE OF THE FACILITY, A TEMPERATURE SCHEDULE FOR THE FACILITY, CONTROL ACTIONS AND/OR CONFIGURATION DATA FOR EACH OF THE ONE OR MORE LOADS OF THE FACILITY, AND UTILITY CURTAILMENT EVENTS

38

COMPARING THE LIVE ENERGY USAGE DATA THAT IS CAPTURED DURING THE FUTURE TIME WINDOW WITH THE ONE OR MORE PREDICTED POWER USAGE PEAKS TO DETERMINE WHETHER THE AI/ML MODEL FAILED TO PREDICT ONE OR MORE POWER USAGE PEAKS DURING THE FUTURE TIME WINDOW THAT EXCEEDED A THRESHOLD POWER USAGE, RESULTING IN ONE OR MORE MISSED POWER USAGE PEAKS

40

IDENTIFYING ONE OR MORE LOADS OF THE FACILITY THAT CONTRIBUTED TO EACH OF THE ONE OR MORE MISSED POWER USAGE PEAKS BASED AT LEAST IN PART ON OPERATIONAL PARAMETERS OF THE ONE OR MORE LOADS DURING THE ONE OR MORE MISSED POWER USAGE PEAKS

42

PROVIDING AS INPUTS AN IDENTIFIER OF THE IDENTIFIED ONE OR MORE LOADS OF THE FACILITY THAT CONTRIBUTED TO EACH OF THE MISSED POWER USAGE PEAKS AND ONE OR MORE OPERATIONAL PARAMETERS OF THE IDENTIFIED ONE OR MORE LOADS THAT CONTRIBUTED TO THE MISSED POWER USAGE PEAKS TO THE AI/ML MODEL AS FEEDBACK TO ENHANCE FUTURE PREDICTIONS OF THE AI/ML MODEL

44

FIG. 2B

**46**

**48 — POWER PREDICTION ALGORITHM**

66 — EQUIPMENT CONTRIBUTING FOR PREDICTED PEAK

INPUT PREDICTED POWER SAMPLES

**50 — LOAD MANAGEMENT ALGORITHM**
- LOAD REDUCTION
- LOAD RECOVERY
- SELF LEARNING- KW CHANGE AND TIME TAKEN

LOAD STATUS (EQUIPMENT ON/OFF)

**68 — CONTROL ACTIONS**

**70 — HVAC POINT WRITE**
1. AHU- REDUCE FAN SPEED/SUPPLY TEMPERATURE SETPOINT CHANGE
2. CHILLER- TEMPERATURE SETPOINT CHANGE
3. SWITCH ON/OFF CHILLER, AHU, FCU, RTUS.
4. VAV - CHANGE ZONE LEVEL

**72 — LIGHTING**
1. SWITCH OFF LIGHTS
2. DIM LIGHTS

**74 — EV CHARGING STATION**
1. LIMIT CURRENT
2. EV STATUS CHANGE TO NOT AVAILABLE

**76 — SUPPLY MAANAGEMENT SYSTEM - SWITCH SUPPLY**

CONTROL ACTION FEEDBACK- PRE AND POST ACTION KW

**64 — DATA INGESTIONS**

KW, WEATHER, BUILDING SCHEDULES

KW LIVE AND HISTORY SAMPLES, KW THRESHOLD, ENERGY THRESHOLD, TOU HOURS, ACTION POINT LIST

**52** — BUILDING MAIN METER DATA
15 MIN INTERVAL LIVE AND HISTORY KW DATA

**54** — WEATHER FORECAST, BUILDING WORKING HOURS SCHEDULE
TEMPERATURE, HUMIDITY, DEWPOINT AND SCHEDULE

**56** — APPLICATION CONFIGURATION DATA
POWER THRESHOLD, TOU ENERGY THRESHOLD, TOU PEAK HOURS

**58** — CONTROL ACTION CONFIGURATION DATA
EQUIPMENT TYPE AND POINT ACTIONS

**60** — UTILITY DRAS SERVER
EVENTS: NORMAL, MEDIUM, HIGH, SPECIAL

**62** — SUPPLY MANAGEMENT SYSTEM (EXPERION/ MICROGRID CONTROLLER)
POWER SOURCE/MODE OF OPERATION, DEMAND RESPONSE

**FIG. 3**

14

REAL TIME POWER CONSUMPTION AT BUILDING LEVEL AND EQUIPMENT LEVEL — 82

AI/ML MODEL — 80
ARIMAX/CATBOOST/LINEAR REGRESSION SMOOTHEN THE CURVE, CONTINUOUS/SELF LEARNING

78

PREDICTED OCCUPANCY — 84

PREDICTED POWER OF BUILDING LEVEL AND EQUIPMENT LEVEL — 90

PROCESS — 92

FIND MISSING PEAK AND IDENTIFY EQUIPMENT CONTRIBUTES FOR MISSING PEAK — 94

CLASSIFICATION MODEL — 86

CONTINUOUS FEEDBACK

INPUT EQUIPMENT OPERATIONAL REAL TIME AND PREDICTED PARAMETERS — 96

DEMAND THRESHOLD — 88

WEATHER PARAMETERS TEMPERATURES, HUMIDITY DEW POINT — 98

SCHEDULES: WEEKDAY/WEEKEND AND EQUIPMENT OPERATION — 100

FIG. 4

EP 4 550 605 A2

15

FIG. 5

FIG. 6

CONFIG. (ASSET LIST) — 132

SELF LEARNING — 134

MODIFY BATCH PRIORITY

kW RESPONSE TIME

BATCH PRIORITY — 136

BATCH ACTIONS — 138

CONTROL ACTIONS

BUILDING — 140

130

FIG. 7

FIG. 8

FORECASTED POWER DEMAND
ACTUAL CONSUMPTION
VCB_2_EM
ORMB_EM_40
ORMB_EM_86
VCB_1_EM
ORMB_EM_83
ORMB_EM_36
IFLR_DC

EP 4 550 605 A2

FIG. 9

166

MONITOR kW
└─168

IDENTIFY EXPECTED
kW REDUCTION
└─170

GET BUILDING ASSET LIST AND
RECOMMENDED ACTIONS
(OFFSET OF ANY PARAMETERS OR
SWITCH ON/OFF)
└─172

174

EXECUTE LOAD
CURTAILMENT ACTIONS

SELF LEARNING
(DQN, A2C ALGORITHM FOR
REINFORCEMENT LEARNING)
- IDENTIFY ACTUAL kW
REDUCTION FOR EACH ACTION
└─176

UPDATE(REFINE) kW
REDUCTION TO ASSET LIST FOR
EACH ACTIONS
└─178

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311074185